# EUROPEAN PATENT SPECIFICATION

(11) **EP 4 535 303 B1**
(45) Date of publication and mention of the grant of the patent: **03.06.2026**
(21) Application number: 24203378.5
(22) Date of filing: 27.09.2024
(51) Int. Cl.: G06V 20/52

(54) **REDUCING INTERNET OF THINGS (IOT) CAMERA ALERTS AND NETWORK BANDWIDTH WITH ASSISTED COLD/HOT ZONE DETERMINATION**
REDUZIERUNG VON INTERNET-DER-DINGE (IOT)-KAMERAALARMEN UND NETZWERKBANDBREITE MIT UNTERSTÜTZTER KALT-/HEISSZONENBESTIMMUNG
RÉDUCTION DES ALERTES DE CAMÉRA DE L'INTERNET DES OBJETS (IDO) ET DE LA LARGEUR DE BANDE DE RÉSEAU AVEC DÉTERMINATION ASSISTÉE DE ZONE FROIDE/CHAUDE

(30) Priority: 29.09.2023 US 202318478543
(43) Date of publication of application: 09.04.2025
(73) Proprietor: Roku, Inc., San Jose, CA 95110 (US)
(72) Inventor: RAMESH, Sunil, San Jose, 95110 (US); CUTTER, Michael, San Jose, 95110 (US); BROUILLETTE, Patrick, San Jose, 95110 (US); GARNER, Gregory, San Jose, 95110 (US); CURTIS, Robert, San Jose, 95110 (US); STERN, David, San Jose, 95110 (US); SASSENRATH, Carl, San Jose, 95110 (US)
(74) Representative: Mewburn Ellis LLP

(56) References cited:
- US-A1- 2006 170 769
- US-A1- 2016 042 621

## Description

### BACKGROUND

### FIELD

This disclosure is generally directed to controlling alerts from Internet of Things (IoT) cameras, and more particularly to reducing errant alerts and/or network bandwidth usage from IoT cameras through the intelligent filtering out of video data. US2016/0042621 dicloses a method for security monitoring with a video camera.

### SUMMARY

Provided herein are system, apparatus, article of manufacture, method and/or computer program product embodiments, and/or combinations and sub-combinations thereof, for reducing errant alerts and/or network bandwidth usage from IoT cameras through the intelligent filtering out of video data. The system, apparatus, article of manufacture, method, and/or computer program product aspects herein are designed to solve technological problems associated with unnecessary network transmissions from an IoT camera in response to the IoT camera detecting motion. In addition, the system, apparatus, article of manufacture, method, and/or computer program product aspects herein solve the additional technological problem of reducing false positive alerts in response to an IoT camera detecting motion. Finally, the system, apparatus, article of manufacture, method, and/or computer program product aspects herein solve the additional technological problem of failing to trigger an alert in response to an IoT camera detecting motion that a user interested in being alerted about.

The invention is defined in the appended independent claims. Aspects operate by a computer-implemented method for reducing errant alerts and network bandwidth usage from an Internet of Things (IoT) camera. The method includes receiving, by at least one computer processor, video data from the IoT camera. The method further includes generating an ignore mask based on the video data, wherein the ignore mask specifies one or more regions in a video stream from the IoT camera that cannot trigger an alert. The method further includes transmitting the ignore mask to the IoT camera. The method further includes receiving the video stream from the IoT camera in response to transmitting the ignore mask to the IoT camera. The method further includes determining that the video stream is associated with an alert. The method further includes transmitting the alert to a user device in response to the determining.

Further aspects operate by a system that includes at least one processor configured to perform operations including receiving video data from an IoT camera. The operations further include generating an ignore mask based on the video data, wherein the ignore mask specifies one or more regions in a video stream from the IoT camera that cannot trigger an alert. The operations further include transmitting the ignore mask to the IoT camera. The operations further include receiving the video stream from the IoT camera in response to transmitting the ignore mask to the IoT camera. The operations further include determining that the video stream is associated with an alert. The operations further include transmitting the alert to a user device in response to the determining.

Further aspects operate by a non-transitory computer-readable medium having instructions stored thereon that, when executed by at least one computing device, cause the at least one computing device perform operations that including receiving video data from an IoT camera. The operations further include generating an ignore mask based on the video data, wherein the ignore mask specifies one or more regions in a video stream from the IoT camera that cannot trigger an alert. The operations further include transmitting the ignore mask to the IoT camera. The operations further include receiving the video stream from the IoT camera in response to transmitting the ignore mask to the IoT camera. The operations further include determining that the video stream is associated with an alert. The operations further include transmitting the alert to a user device in response to the determining.

### BRIEF DESCRIPTION OF THE FIGURES

The accompanying drawings are incorporated herein and form a part of the specification.
FIG. 1 illustrates a block diagram of a multimedia environment, according to some aspects.
FIG. 2 illustrates a block diagram of a streaming media device, according to some aspects.
FIG. 3 illustrates a illustrates a block diagram of a system for providing intelligent filtering and alert triggering for one or more IoT cameras at a premises, according to some aspects.
FIG. 4 is a flowchart for a process for reducing errant alerts and/or network bandwidth usage from IoT cameras through the intelligent filtering out of video data using an ignore mask, according to some aspects.
FIG. 5 is a flowchart for a process for regenerating an ignore mask for intelligent filtering of video data from an IoT camera, according to some aspects.
FIG. 6 is a flowchart for a process for reducing errant alerts and/or network bandwidth usage from IoT cameras through the intelligent filtering out of video data using object detection, according to some aspects.
FIG. 7 illustrates an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Modern living and working spaces, such as homes, hotels, or offices, are increasingly equipped with "Internet of Things" (IoT) devices that are configured to monitor for a particular event and to alert a user when the event is detected. For example, modern living and working spaces are increasingly equipped with IoT cameras that monitor for various events (e.g., a break-in, a delivery person at your door, etc.) and alert a user when the event is detected. However, many IoT cameras do not have sufficient local compute capability to properly detect people, animals, packages, or other types of objects. Instead, these IoT cameras may alert a user when they detect a change in motion (e.g., a change in a threshold number of pixels from frame to frame in the video stream). But this often means any "high motion" activity viewed by the IoT camera (e.g., trees swaying in the wind) may trigger an alert and cause the IoT camera to upload a video of the detected motion to a server (or cloud computing platform). Because these types of IoT cameras may trigger an alert on any "high motion"event, they often trigger a false positive alert (e.g., triggering an alert on trees swaying in the wind) and/or cause unnecessary transmissions over a network.

Additionally, many IoT cameras fail to trigger an alert for an event because they fail to detect the event (e.g., a burglar moving through bushes that are swaying in the wind). These false negative situations often occur even with an IoT camera having sufficient local compute capability to detect objects as opposed to merely detecting "high motion" activity.

Provided herein are system, apparatus, device, method and/or computer program product embodiments, and/or combinations and sub-combinations thereof, for reducing errant alerts and/or network bandwidth usage from IoT cameras through the intelligent filtering out of irrelevant alerts. In some aspects, the intelligent filtering may involve a user interactively drawing one or more polygons over regions of the frame that should be ignored by the IoT camera (e.g., regions that should not generate an alert). In other words, the user may interactively create an ignore mask (e.g., an ignore bitmask). The IoT camera can then ignore "high motion" in regions of the frame covered by this ignore mask. For example, if the IoT camera faces a backyard of a home with one side having a lot of trees and the other side having a patio view, the user can draw a polygon over the region of the frame covering the side having a lot of trees so that the IoT camera ignores the "high motion" associated with the trees swaying in the wind. But manually drawing one or more polygons over regions of the frame that should be ignored by the IoT camera is often tedious and/or error prone. For example, the IoT camera may trigger a false positive alert on "high motion" regions not covered by the ignore bit mask. The IoT camera may also fail to trigger an alert for an event because it fails to detect "high motion" in a region covered by the ignore mask (e.g., a burglar moving through bushes that are swaying the wind). In other words, the IoT camera may suffer from a false negative.

To solve these technological problems, in some aspects, the intelligent filtering may involve the IoT camera uploading one or more frames of the video stream (or the video stream itself) to a server (or cloud computing platform). The server (or cloud computing platform) may detect "high motion" in regions in the uploaded frames (or the video stream itself). In other words, the server (or cloud computing platform) may detect regions that regularly have "high motion." The server (or cloud computing platform) may then generate an ignore mask based on the detected regions of "high motion." For example, the server (or cloud computing platform) may generate an ignore mask that covers the detected regions of "high motion." The server (or cloud computing platform) may then transmit the generated ignore mask to the IoT camera so that the IoT camera ignores triggering an alert for those "high motion" regions in the frames (or the video stream).

In some aspects, the intelligent filtering may involve the IoT camera generating one or more motion vectors for the video stream. The motion vectors may represent regions of "high motion" in the video stream. The IoT camera may then upload the one or more motion vectors to a server (or cloud computing platform). The server (or cloud computing platform) may then generate an ignore mask based on the one or more motion vectors. For example, the server (or cloud computing platform) may generate an ignore bit mask that covers the regions of "high motion" in the video stream as identified by the motion vectors. The server (or cloud computing platform) may then transmit the generated ignore mask to the IoT camera so that the IoT camera ignores triggering an alert for those "high motion" regions in the video stream.

In some aspects, the intelligent filtering may involve the IoT camera uploading one or more frames of the video stream (or the video stream itself) to a server (or cloud computing platform). The server (or cloud computing platform) may detect objects (e.g., people, animals, packages, trees, etc.) in the frames (or the video stream itself). For example, the server (or cloud computing platform) may apply artificial intelligence (AI) techniques (e.g., computer vision techniques such a neural network) to the frames (or the video stream) to detect objects in the frames (or the video stream). The server (or cloud computing platform) may then generate an ignore mask based on the detected objects. For example, the server (or cloud computing platform) may generate an ignore bit mask that covers detected objects in the frames (or video stream) that are associated with motion but that should not trigger an alert (e.g., a tree, shadow, etc.) The server (or cloud computing platform) may then transmit the generated ignore mask to the IoT camera so that the IoT camera ignores triggering an alert for the regions in the frames (or the video stream) associated with those detected objects.

These and various other features and advantages of an intelligent filtering and alert system for IoT cameras in accordance with various aspects will be described in detail herein.

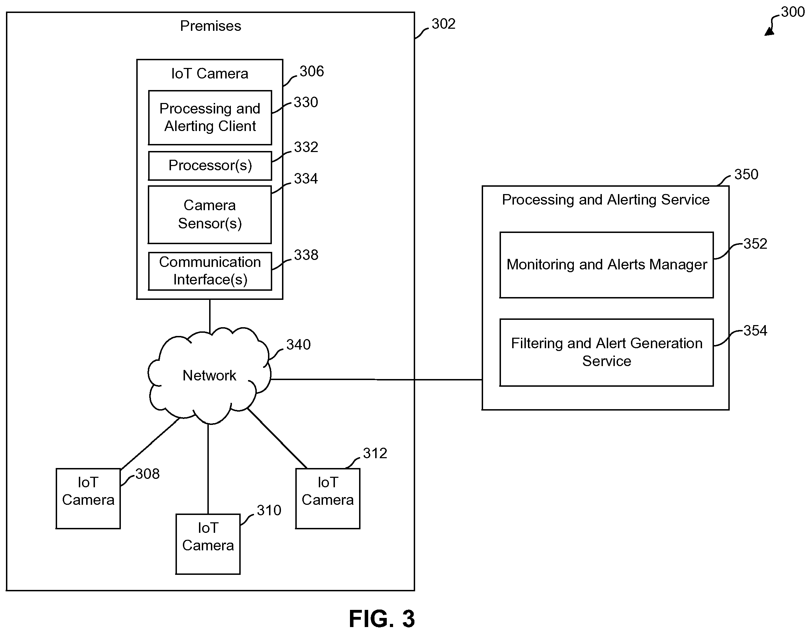

Various embodiments of this disclosure may be implemented using and/or may be part of system 300 shown in FIG. 3. It is noted, however, that system 300 is provided solely for illustrative purposes, and is not limiting. Embodiments of this disclosure may be implemented using and/or may be part of environments different from and/or in addition to system 300, as will be appreciated by persons skilled in the relevant art(s) based on the teachings contained herein.

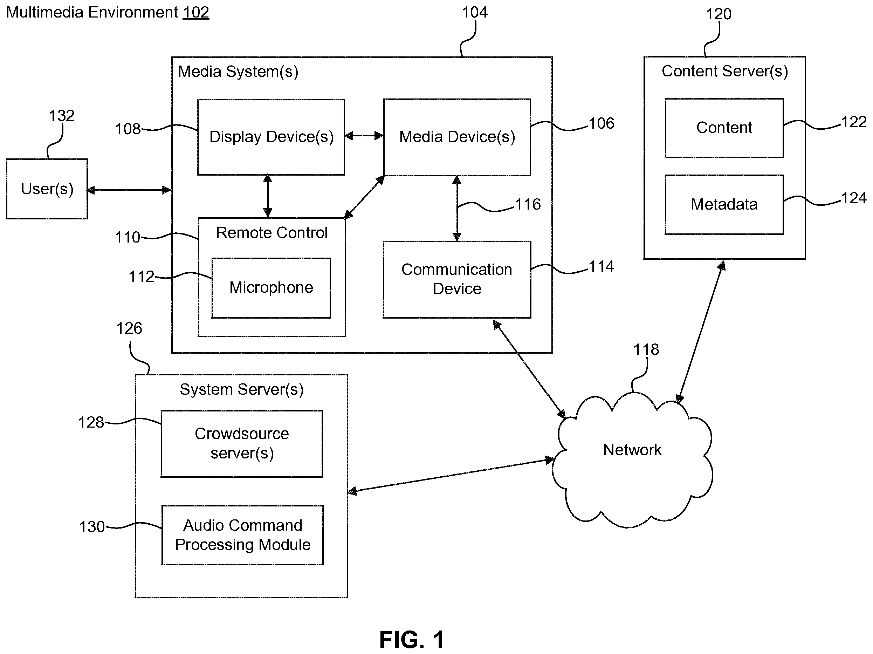

Various embodiments of this disclosure may also be implemented using and/or may be part of a multimedia environment 102 shown in FIG. 1. It is noted, however, that multimedia environment 102 is provided solely for illustrative purposes, and is not limiting. Embodiments of this disclosure may be implemented using and/or may be part of environments different from and/or in addition to the multimedia environment 102, as will be appreciated by persons skilled in the relevant art(s) based on the teachings contained herein. An example of the multimedia environment 102 shall now be described.

### Multimedia Environment

FIG. 1 illustrates a block diagram of a multimedia environment 102, according to some embodiments. In a non-limiting example, multimedia environment 102 may be directed to streaming media. However, this disclosure is applicable to any type of media (instead of or in addition to streaming media), as well as any mechanism, means, protocol, method and/or process for distributing media.

The multimedia environment 102 may include one or more media systems 104. A media system 104 could represent a family room, a kitchen, a backyard, a home theater, a school classroom, a library, a car, a boat, a bus, a plane, a movie theater, a stadium, an auditorium, a park, a bar, a restaurant, or any other location or space where it is desired to receive and play streaming content. User(s) 132 may operate with the media system 104 to select and consume content.

Each media system 104 may include one or more media devices 106 each coupled to one or more display devices 108. It is noted that terms such as "coupled," "connected to," "attached," "linked," "combined" and similar terms may refer to physical, electrical, magnetic, logical, etc., connections, unless otherwise specified herein.

Media device 106 may be a streaming media device, DVD or BLU-RAY device, audio/video playback device, cable box, and/or digital video recording device, to name just a few examples. Display device 108 may be a monitor, television (TV), computer, smart phone, tablet, wearable (such as a watch or glasses), appliance, internet of things (IoT) device, and/or projector, to name just a few examples. In some embodiments, media device 106 can be a part of, integrated with, operatively coupled to, and/or connected to its respective display device 108.

Each media device 106 may be configured to communicate with network 118 via a communication device 114. The communication device 114 may include, for example, a cable modem or satellite TV transceiver. The media device 106 may communicate with the communication device 114 over a link 116, wherein the link 116 may include wireless (such as WiFi) and/or wired connections.

In various embodiments, the network 118 can include, without limitation, wired and/or wireless intranet, extranet, Internet, cellular, Bluetooth, infrared, and/or any other short range, long range, local, regional, global communications mechanism, means, approach, protocol and/or network, as well as any combination(s) thereof.

Media system 104 may include a remote control 110. The remote control 110 can be any component, part, apparatus and/or method for controlling the media device 106 and/or display device 108, such as a remote control, a tablet, laptop computer, smartphone, smartwatch, wearable, on-screen controls, integrated control buttons, audio controls, or any combination thereof, to name just a few examples. In an embodiment, the remote control 110 wirelessly communicates with the media device 106 and/or display device 108 using cellular, Bluetooth, infrared, etc., or any combination thereof. The remote control 110 may include a microphone 112, which is further described below.

The multimedia environment 102 may include a plurality of content servers 120 (also called content providers, channels or sources 120). Although only one content server 120 is shown in FIG. 1, in practice the multimedia environment 102 may include any number of content servers 120. Each content server 120 may be configured to communicate with network 118.

Each content server 120 may store content 122 and metadata 124. Content 122 may include any combination of music, videos, movies, TV programs, multimedia, images, still pictures, text, graphics, gaming applications, advertisements, programming content, public service content, government content, local community content, software, and/or any other content or data objects in electronic form.

In some embodiments, metadata 124 comprises data about content 122. For example, metadata 124 may include associated or ancillary information indicating or related to writer, director, producer, composer, artist, actor, summary, chapters, production, history, year, trailers, alternate versions, related content, applications, and/or any other information pertaining or relating to the content 122. Metadata 124 may also or alternatively include links to any such information pertaining or relating to the content 122. Metadata 124 may also or alternatively include one or more indexes of content 122, such as but not limited to a trick mode index.

The multimedia environment 102 may include one or more system servers 126. The system servers 126 may operate to support the media devices 106 from the cloud. It is noted that the structural and functional aspects of the system servers 126 may wholly or partially exist in the same or different ones of the system servers 126.

The media devices 106 may exist in thousands or millions of media systems 104. Accordingly, the media devices 106 may lend themselves to crowdsourcing embodiments and, thus, the system servers 126 may include one or more crowdsource servers 128.

For example, using information received from the media devices 106 in the thousands and millions of media systems 104, the crowdsource server(s) 128 may identify similarities and overlaps between closed captioning requests issued by different users 132 watching a particular movie. Based on such information, the crowdsource server(s) 128 may determine that turning closed captioning on may enhance users' viewing experience at particular portions of the movie (for example, when the soundtrack of the movie is difficult to hear), and turning closed captioning off may enhance users' viewing experience at other portions of the movie (for example, when displaying closed captioning obstructs critical visual aspects of the movie). Accordingly, the crowdsource server(s) 128 may operate to cause closed captioning to be automatically turned on and/or off during future streamings of the movie.

The system servers 126 may also include an audio command processing module 130. As noted above, the remote control 110 may include a microphone 112. The microphone 112 may receive audio data from users 132 (as well as other sources, such as the display device 108). In some embodiments, the media device 106 may be audio responsive, and the audio data may represent verbal commands from the user 132 to control the media device 106 as well as other components in the media system 104, such as the display device 108.

In some embodiments, the audio data received by the microphone 112 in the remote control 110 is transferred to the media device 106, which is then forwarded to the audio command processing module 130 in the system servers 126. The audio command processing module 130 may operate to process and analyze the received audio data to recognize the user 132's verbal command. The audio command processing module 130 may then forward the verbal command back to the media device 106 for processing.

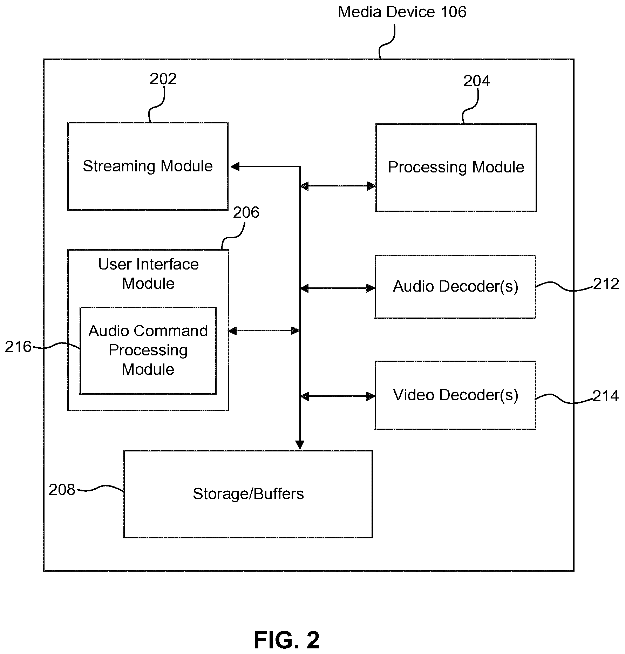

In some embodiments, the audio data may be alternatively or additionally processed and analyzed by an audio command processing module 216 in the media device 106 (see FIG. 2). The media device 106 and the system servers 126 may then cooperate to pick one of the verbal commands to process (either the verbal command recognized by the audio command processing module 130 in the system servers 126, or the verbal command recognized by the audio command processing module 216 in the media device 106).

FIG. 2 illustrates a block diagram of an example media device 106, according to some embodiments. Media device 106 may include a streaming module 202, processing module 204, storage/buffers 208, and user interface module 206. As described above, the user interface module 206 may include the audio command processing module 216.

The media device 106 may also include one or more audio decoders 212 and one or more video decoders 214.

Each audio decoder 212 may be configured to decode audio of one or more audio formats, such as but not limited to AAC, HE-AAC, AC3 (Dolby Digital), EAC3 (Dolby Digital Plus), WMA, WAV, PCM, MP3, OGG GSM, FLAC, AU, AIFF, and/or VOX, to name just some examples.

Similarly, each video decoder 214 may be configured to decode video of one or more video formats, such as but not limited to MP4 (mp4, m4a, m4v, f4v, f4a, m4b, m4r, f4b, mov), 3GP (3gp, 3gp2, 3g2, 3gpp, 3gpp2), OGG (ogg, oga, ogv, ogx), WMV (wmv, wma, asf), WEBM, FLV, AVI, QuickTime, HDV, MXF (OP1a, OP-Atom), MPEG-TS, MPEG-2 PS, MPEG-2 TS, WAV, Broadcast WAV, LXF, GXF, and/or VOB, to name just some examples. Each video decoder 214 may include one or more video codecs, such as but not limited to H.263, H.264, H.265, AVI, HEV, MPEG1, MPEG2, MPEG-TS, MPEG-4, Theora, 3GP, DV, DVCPRO, DVCPRO, DVCProHD, IMX, XDCAM HD, XDCAM HD422, and/or XDCAM EX, to name just some examples.

Now referring to both FIGS. 1 and 2, in some embodiments, the user 132 may interact with the media device 106 via, for example, the remote control 110. For example, the user 132 may use the remote control 110 to interact with the user interface module 206 of the media device 106 to select content, such as a movie, TV show, music, book, application, game, etc. The streaming module 202 of the media device 106 may request the selected content from the content server(s) 120 over the network 118. The content server(s) 120 may transmit the requested content to the streaming module 202. The media device 106 may transmit the received content to the display device 108 for playback to the user 132.

In streaming embodiments, the streaming module 202 may transmit the content to the display device 108 in real time or near real time as it receives such content from the content server(s) 120. In non-streaming embodiments, the media device 106 may store the content received from content server(s) 120 in storage/buffers 208 for later playback on display device 108.

### Intelligent Filtering Out of Errant Alerts from an IoT Camera

FIG. 3 illustrates a block diagram of a system 300 for providing intelligent filtering and alert triggering for one or more IoT cameras at a premises, according to some aspects. As shown in FIG. 3, system 300 includes a premises 302 and a processing and alerting service 350. Each of these aspects of system 300 will now be described.

As shown in FIG. 3, system 300 includes a premises 302 in which one or more IoT cameras 306, 308, 310, and 312 are present. Premises 302 may comprise, for example and without limitation, a home, an office, a building, a factory, a warehouse, a bar, a restaurant, a movie theater, a stadium, an auditorium, a car, a bus, a boat, or any other structure, location or space in which IoT devices may be present. Although four IoT cameras are shown as being present in premises 302 for the sake of illustration, it should be understood that premises 302 may include any number of IoT cameras, including tens, hundreds or even thousands of IoT cameras.

IoT cameras 306, 308, 310, and 312 may be communicatively connected to a network 340 (e.g., a local area network (LAN)) via a suitable wired and/or wireless connection. Network 340 may be implemented using a hub-and-spoke or star topology. For example, in accordance with such an implementation, each of IoT cameras 306, 308, 310, and 312 may be connected to a router via a corresponding Ethernet cable, wireless access point (AP), or IoT device hub. The router may include a modem that enables the router to act as an interface between entities connected to network 340 and an external wide area network (WAN), such as the Internet. Alternatively, network 340 may be implemented using a full or partial mesh network topology. A mesh network implementation of network 340 may likewise be connected to an external WAN, such as the Internet, via a router. However, these are examples only, and other techniques for implementing network 340 may be used.

As further shown in FIG. 3, IoT camera 306 may comprise one or more processors 332, one or more camera sensors 334, and one or more communication interfaces 338. Processor(s) 332 may comprise one or more central processing units (CPUs), microcontrollers, microprocessors, signal processors, ASICs (application specific integrated circuits), and/or other physical hardware processor circuits for performing tasks such as program execution, signal coding, data processing, input/output processing, power control, and/or other functions.

Camera sensor(s) 334 may comprise one or more sensors, devices, or systems for visually recording motion, objects, and/or events in the physical environment of IoT camera 306. For example, a camera sensor 334 may be a charge-coupled device (CCD) sensor, a complementary metal oxide semiconductor (CMOS) sensor, or other type of camera sensor.

Communication interface(s) 338 may comprise components suitable for enabling IoT camera 306 to wirelessly communicate with other devices via a corresponding wireless protocol. Communication interface(s) 338 may include, for example and without limitation, one or more of: a Wi-Fi interface that enables IoT camera 306 to wirelessly communicate with an access point or other remote Wi-Fi-capable device according to one or more of the wireless network protocols based on the IEEE (Institute of Electrical and Electronics Engineers) 802.11 family of standards, a cellular interface that enables IoT camera 306 to wirelessly communicate with remote devices via one or more cellular networks, a Bluetooth interface that enables IoT camera 306 to engage in short-range wireless communication with other Bluetooth-enabled devices, or a Zigbee interface that enables IoT camera 306 to wirelessly communicate with other Zigbee-enabled devices.

Communication interface(s) 338 may additionally or alternatively comprise components suitable for enabling IoT camera 306 to communicate over a wired connection with other devices via a corresponding wired protocol, such as a Universal Serial Bus (USB) connection and protocol or Ethernet connection and protocol.

As further shown in FIG. 3, IoT camera 306 may include a processing and alerting client 330. The features of processing and alerting client 330 will be described below. Processing and alerting client 330 may be implemented as processing logic that can comprise hardware (e.g., circuitry, dedicated logic, programmable logic, microcode, etc.), software (e.g., instructions executing on a processing device), or a combination thereof. Processing and alerting client 330 may comprise a software application that is executed by processor(s) 332 of IoT camera 306.

Each of IoT camera 308, 310, and 312 may include similar components to those shown with respect to IoT camera 306. Thus, for example, each of IoT camera 308, 310, and 312 may include one or more processors, one or more camera sensors, one or more communication interfaces, and a processing and alerting client.

Processing and alerting client 330 may be configured to interact with processing and alerting service 350 to enable intelligent processing and alerting services for IoT cameras to be provided for premises 302.

As further shown in FIG. 3, system 300 includes processing and alerting service 350. Processing and alerting service 350 may be implemented as processing logic that can comprise hardware (e.g., circuitry, dedicated logic, programmable logic, microcode, etc.), software (e.g., instructions executing on a processing device), or a combination thereof. Processing and alerting service 350 may be implemented by one or more devices (e.g., one or more servers) that are remote from premises 302 but communicatively connected thereto (e.g., communicatively connected to network 340) via one or more networks. Alternatively, prcoessing and alerting service 350 may be implemented by a device within premises 302. Still further, processing and alerting service 350 may be implemented in a distributed manner by two or more remotely located and/or local devices. Still further, processing and alerting service 350 may be implemented in a cloud computing platform.

Processing and alerting service 350 may comprise a monitoring and alerts manager 352. Monitoring and alerts manager 352 may enable a user (e.g., a user associated with premises 302) to specify one or more events to be monitored for by processing and alerting service 350 utilizing at least one or more of IoT cameras 306, 308, 310, and 312. For example, a user may interact with monitoring and alerts manager 352 via a user interface (UI) to specify one or more events to be monitored for by processing and alerting service 350 utilizing at least one or more of IoT cameras 306, 308, 310, and 312.

An event may be any set of conditions and/or phenomena that may be monitored for using at least one or more IoT cameras in a premises (e.g., one or more of IoT cameras 306, 308, 310, and 312 in premises 302).

Monitoring and alerts manager 352 may enable a user to select an event for monitoring from among a set of predefined events, wherein each predefined event is represented by a corresponding event definition. For example, monitoring and alerts manager 352 may present a set of predefined events to a user via a UI and the user may select one or more of the predefined events from the set to initiate monitoring thereof. As another example, a user may provide natural language input (e.g., either spoken or typed) via the UI, and monitoring and alerts manager 352 may utilize a large language model (LLM) or other suitable model/algorithm to interpret such natural language input to determine that the user has requested monitoring of one or more events within a set of predefined events.

Predefined events may include, for example, a set of default event types provided by processing and alerting service 350. Predefined events may also comprise events defined by or on behalf of other users or for other premises, which are then shared with multiple users for use in multiple premises.

Monitoring and alerts manager 352 may also operate to generate new events that are eligible for monitoring based on user input collected from IoT camera(s) associated with a user. For example, monitoring and alerts manager 352 may receive user input and analyze such user input to define a new event whose occurrence can be monitored for by processing and alerting service 350. Such user input may be provided, for example, via a UI. For example, the UI may enables a user to define a new event. Such GUI may enable the user to define the new event by specifying one or more of condition(s) that will trigger the event.

Monitoring and alerts manager 352 may also operate to generate new events that are eligible for monitoring based on video data collected from IoT camera(s) associated with a user. For example, monitoring and alerts manager 352 may receive video data and analyze such video data using AI to define a new event whose occurrence can be monitored for by processing and alerting service 350.

Processing and alerting service 350 may further comprise a filtering and alert generation service 354. Alternatively, in some aspects, the functionality and/or capabilities of filtering and alert generation service 354 described herein may be implemented in a processing and alerting client 330 in an IoT camera (e.g., IoT camera 306).

Filtering and alert generation service 354 may operate to trigger an alert in response to an uploaded video from an IoT camera. Filtering and alert generation service 354 may trigger the alert by transmitting an alert (or alert notice) to a user device (e.g, a desktop computer, laptop, smartphone, smartwatch, or other type of device as would be appreciate by a person of ordinary skill in the art).

Filtering and alert generation service 354 may also operate to process video from an IoT camera to determine whether the video matches an event specified by monitoring and alerts manager 352

Filtering and alert generation service 354 may also operate to generate an ignore mask to enable an IoT camera to ignore triggering an alert for one or more regions in the video stream that should not trigger alerts (e.g., one or more regions that always contain motion or are associated with irrelevant objects like trees). An ignore mask may specify one or more regions (or blocks) in a frame of the video stream that should be ignored by the IoT camera even if the one or more regions contain motion. In other words, the ignore mask may specify one or more regions that are not to trigger an alert by the IoT camera even if they contain motion. The ignore mask may specify a region as one or more blocks of pixels in the frame. The ignore mask may also specify a region as individual pixels in the frame. The ignore mask may be implemented as a bitmask. The ignore mask may also be implemented using various other data structures as would be appreciated by a person of ordinary skill in the art.

In some aspects, to generate the ignore mask, an IoT camera may upload one or more frames of a video stream to filtering and alert generation service 354 when the IoT camera is initially setup (e.g., plugged into an electrical outlet). The IoT camera may also upload the one or more frames of the video stream to filtering and alert generation service 354 when the IoT camera is moved to a new location. The IoT camera may also upload the one or more frames of the video stream to filtering and alert generation service 354 when the IoT camera is instructed by a user to regenerate the ignore mask. The IoT camera may also upload the one or more frames of the video stream to filtering and alert generation service 354 when there is a change in the time of day (e.g., morning to evening) or season (e.g., winter to spring). The IoT camera may also upload the one or more frames of the video stream to filtering and alert generation service 354 based on a schedule (e.g., every 8 hours). The IoT camera may also upload the one or more frames of the video stream to filtering and alert generation service 354 based on other conditions or events as would be appreciated by a person of ordinary skill in the art.

Filtering and alert generation service 354 may generate the ignore mask based on the uploaded one or more frames of the video stream from the IoT camera. In some aspects, filtering and alert generation service 354 may generate the ignore mask by detecting objects in the one or more frames of the video stream. Filtering and alert generation service 354 may detect one or more objects in the frames that should not trigger an alert even if they are in motion. For example, filtering and alert generation service 354 may detect a tree swaying in the wind in the frames. Filtering and alert generation service 354 may also detect one or more objects in the frames that should trigger an alert if they are motion. For example, processing and alerting service 350 may detect a person in the frames.

Filtering and alert generation service 354 may detect the one or more objects in the frames using various artificial intelligence (AI) techniques. For example, filtering and alert generation service 354 may detect the one or more objects in the frames using a neural network. Filtering and alert generation service 354 may detect the one or more objects in the frames using various other techniques as would be appreciated by a person of ordinary skill in the art.

Filtering and alert generation service 354 may determine whether an object should trigger an alert if it is in motion using various AI techniques. For example, filtering and alert generation service 354 may determine whether an object should trigger an alert if it is in motion using a machine learning model. Filtering and alert generation service 354 may train the machine learning model based on various data such as, but not limited, the location of the IoT camera, the time of day or season, user activity, or other data as would be appreciated by a person of ordinary skill in the art. For example, filtering and alert generation service 354 may use the machine learning model to determine that a tree swaying in the wind should not trigger an alert. By contrast, filtering and alert generation service 354 may use the machine learning model to determine that a person walking around a house between 12:00 AM and 4:00 AM should trigger alert.

Filtering and alert generation service 354 may generate the ignore mask based on the detected one or more objects in the frames of the video stream from the IoT camera. Filtering and alert generation service 354 may generate the ignore mask such that a region covering a detected object that should not trigger an alert (e.g., a tree swaying in the wind) is indicated in the ignore mask as to be ignored by the IoT camera. Similarly, filtering and alert generation service 354 may generate the ignore mask such that a region covering a detected object that should trigger an alert (e.g., a person walking around a house) is indicated in the ignore mask as should not be ignored by the IoT camera.

In some other aspects, to generate the ignore mask, an IoT camera may upload one or more frames of a video stream (or the videos steam itself) to filtering and alert generation service 354. This may occur when the IoT camera is initially setup. This may also occur when the IoT camera is moved to a new location. This may also occur when the IoT camera is instructed by a user to regenerate the ignore mask. This may also occur when there is a change in the time of day (e.g., morning to evening) or season (e.g., winter to spring). This may also occur based on a schedule (e.g., every 8 hours). This may also occur based on other conditions or events as would be appreciated by a person of ordinary skill in the art.

Filtering and alert generation service 354 may generate the ignore mask based on the uploaded one or more frames of the video stream (or the video steam itself) from the IoT camera. In some aspects, filtering and alert generation service 354 may generate the ignore mask by detecting one or more regions in the one or more frames (or the video stream itself) that have motion above a threshold value. The threshold value may be configured by a user. The threshold value may also be defined by filtering and alert generation service 354.

Filtering and alert generation service 354 may generate the ignore mask such that a region having motion above the threshold value (e.g., a tree swaying in the wind) is indicated in the ignore mask as to be ignored by the IoT camera. Similarly, filtering and alert generation service 354 may generate the ignore mask such that a region that does not have motion above the threshold value is indicated in the ignore mask as should not be ignored by the IoT camera.

In some other aspects, to generate the ignore mask, an IoT camera may upload one or more motion vectors to filtering and alert generation service 354. The IoT camera may generate the one or more motion vectors by determining motion in the video stream over a period of time (e.g., 5 minutes, 30 minutes, 1 hour, etc.). For example, the IoT camera may detect a number of pixel changes in a region of the video stream over a period of time. The IoT camera may generate a motion vector where the number of pixel changes is greater than a threshold value. The threshold value may be configured by a user. The threshold value may also be defined by the IoT camera. The threshold value may be defined in various other ways as would be appreciated by a person of ordinary skill in the art. The period of time may be configured by a user. The period of time may also be defined by the IoT camera. The period of time may be defined in various other ways as would be appreciated by a person of ordinary skill in the art.

The IoT camera may generate and upload the one or more motion vectors to filtering and alert generation service 354 when the IoT camera is initially setup. The IoT camera may also generate and upload the one or more motion vectors to filtering and alert generation service 354 when the IoT camera is moved to a new location. The IoT camera may also generate and upload the one or more motion vectors to filtering and alert generation service 354 when the IoT camera is instructed by a user to regenerate the ignore mask. The IoT camera may also generate and upload the one or more motion vectors to filtering and alert generation service 354 when there is a change in the time of day (e.g., morning to evening) or season (e.g., winter to spring). The IoT camera may also generate and upload the one or more motion vectors to filtering and alert generation service 354 based on a schedule (e.g., every 8 hours). The IoT camera may also generate and upload one or more motion vectors to filtering and alert generation service 354 based on other conditions or events as would be appreciated by a person of ordinary skill in the art.

Filtering and alert generation service 354 may generate the ignore mask based on the uploaded one or more motion vectors from the IoT camera. In some aspects, filtering and alert generation service 354 may generate the ignore mask by determining that one or more motion vectors are associated with motion above a threshold value. The threshold value may be configured by a user. The threshold value may also be defined by processing and alerting service 350. The threshold value may be defined in various other ways as would be appreciated by a person of ordinary skill in the art.

Filtering and alert generation service 354 may generate the ignore mask such that a region having a motion vector above the threshold value is indicated in the ignore mask as to be ignored by the IoT camera. Similarly, filtering and alert generation service 354 may generate the ignore mask such that a region that does not have a motion vector above the threshold value is indicated in the ignore mask as should not be ignored by the IoT camera.

In some other aspects, to generate the ignore mask, an IoT camera may upload various other types of data to filtering and alert generation service 354 as would be appreciated by a person of ordinary skill in the art.

In some aspects, after filtering and alert generation service 354 generates the ignore mask, filtering and alert generation service 354 may transmit the generated ignore mask to an IoT camera. For example, filtering and alert generation service 354 may transmit the generated ignore mask to the IoT camera that uploaded the one or more frames, the video stream, or the one or more motion vectors to filtering and alert generation service 354 for generation of the ignore mask.

An IoT camera may receive an ignore mask from filtering and alert generation service 354. The IoT camera may then apply the ignore mask to the current video stream it is capturing so as to ignore regions in the video stream in which motion should not trigger an alert.

The IoT camera may apply the ignore mask (e.g., an ignore bitmask) by generating a current motion mask (e.g., a current motion bitmask) for the current video stream, where the current motion mask specifies blocks of the video stream which have motion above a threshold value. The threshold value may be configured by a user. The threshold value may also be defined by the IoT camera. The threshold value may be defined in various other ways as would be appreciated by a person of ordinary skill in the art.

For example, the IoT camera may generate the current motion mask by detecting a number of pixel changes in a region of the video stream over a period of time. The IoT camera may specify in the current motion mask that a region has high motion where it detects a number of pixel changes over a period of time in that region that is greater than a threshold value. The threshold value may be configured by a user. The threshold value may also be defined by the IoT camera. The threshold value may be defined in various other ways as would be appreciated by a person of ordinary skill in the art. The period of time may be configured by a user. The period of time may also be defined by the IoT camera. The period of time may be defined in various other ways as would be appreciated by a person of ordinary skill in the art. The IoT camera may generate the current motion mask using various other techniques as would be appreciated by a person of ordinary skill in the art.

Ins some aspects, after generating the current motion mask, the IoT camera may upload the current motion mask and ignore mask to filtering and alert generation service 354. Filtering and alert generation service 354 may determine, based on the current motion mask and ignore mask, whether the IoT camera is to upload the video stream to filtering and alert generation service 354 for further processing.

In some other aspects, after generating the current motion mask, the IoT camera may process the video stream based on the current motion mask and the ignore mask. For example, the IoT camera may eliminate the ignore mask from the current motion mask. The IoT camera may eliminate the ignore mask (e.g., an ignore bitmask) from the current motion mask (e.g., a current motion bitmask) by performing an AND operation between the ignore mask and the current motion mask, thereby producing a resulting mask (e.g., a resulting bitmask). The IoT camera may then upload the video stream to filtering and alert generation service 354 for processing if the resulting mask is all zeroes. The IoT camera may skip uploading the video stream to filtering and alert generation service 354 for processing if the resulting mask includes non-zeroes.

In some aspects, filtering and alert generation service 354 may receive an uploaded video stream from the IoT camera. For example, this may occur in response to the IoT camera producing a resulting mask (e.g., a resulting bitmask) that is all zeroes (e.g., after the IoT camera performed an AND operation between an ignore bitmask and a current motion bitmask). This may also occur in response to the IoT camera identifying an event directly in the video stream (e.g., detecting a person walking outside a house).

In some aspects, filtering and alert generation service 354 may trigger an alert based on the mere receipt of the uploaded video. In some other aspects, filtering and alert generation service 354 may perform further processing on the uploaded video stream to identify whether it is associated with one or more events of interest (e.g., process the uploaded video stream further prior to issuing any alerts). In other words, filtering and alert generation service 354 may perform further processing on the video stream to avoid triggering alerts on motion events that a user (e.g., a user of the IoT camera) considers irrelevant. While this may involve the IoT camera transmitting a video stream more often to filtering and alert generation service 354, filtering and alert generation service 354's further processing of the uploaded video stream may result in less false negatives (e.g., failing to trigger an alert where a burglar is walking in the bushes).

In some aspects, filtering and alert generation service 354 may perform further processing on the uploaded video stream by detecting one or more objects in the video stream. Filtering and alert generation service 354 may detect one or more objects in video stream using various AI techniques. For example, filtering and alert generation service 354 may detect one or more objects in the video stream using a neural network. Filtering and alert generation service 354 may detect one or more objects in the video stream using various other techniques as would be appreciated by a person of ordinary skill in the art.

In response to detecting one or more objects, filtering and alert generation service 354 may determine whether the detected one or more objects (e.g., one or more objects in motion) correspond to an event being monitored for by monitoring and alerts manager 352. If so, filtering and alert generation service 354 may operate to trigger an alert for the video stream from the IoT camera.

In some aspects, filtering and alert generation service 354 may perform further processing on the uploaded video stream to account for camera sensor and/or video processing issues associated with the IoT camera. For example, the IoT camera may have a fixed focus. But having a fixed focus may cause the IoT camera to upload a video stream when it detects high motion (as described above) that is very close to the camera sensor. This motion may not be the type of motion that a user considers relevant for alert generation purposes. For example, the IoT camera may be positioned a few inches behind a window in a house. The IoT camera may detect high motion (e.g., motion above a threshold value) occurring very close to the IoT camera (e.g., a few inches from the IoT camera) rather than at the configured fixed focus range of the IoT camera. For example, in the case where the IoT camera is positioned a few inches behind a window in a house, the IoT camera may detect high levels of motion when a spider moves across the window.

Filtering and alert generation service 354 may perform further processing on the uploaded video stream to avoid triggering an alert in these cases. For example, filtering and alert generation service 354 may perform spatial filtering on the uploaded video stream as would be appreciated by a person of ordinary skill in the art. If the result of the spatial filtering is that no motion remains, filtering and alert generation service 354 can skip triggering an alert. If the result of the spatial filtering is that motion remains, filtering and alert generation service 354 can trigger an alert or perform further processing (e.g., object detection) on the uploaded video stream as described above.

In some aspects, filtering and alert generation service 354 may perform further processing on the uploaded video stream to account for other video processing issues associated with the IoT camera. For example, the IoT camera may be an IoT camera that pans and/or tilts. In this case, the IoT camera is often capturing video while in motion. But the motion of the IoT camera itself should not trigger an alert. Moreover, if the IoT camera uses an ignore mask (as described above), applying the ignore mask will often fail to filter out irrelevant motion because the IoT camera pans and/or tilts.

In some aspects, to solve these technological problems, filtering and alert generation service 354 may process the uploaded video stream (or motion vectors) from the IoT camera as though the IoT camera is pointing inside a sphere. Filtering and alert generation service 354 may map pixels in the uploaded video stream onto the inside of the sphere. Filtering and alert generation service 354 may also subtract out motion associated with the IoT camera panning and/or tilting from the determination of any motion vector. Filtering and alert generation service 354 may then proceed with generation of an ignore mask, detection of one or more objects, and/or alert generation as described above.

In some aspects, filtering and alert generation service 354 may perform further processing on the uploaded video stream to avoid unnecessary alert triggering as would be appreciated by a person of ordinary skill in the art.

In some aspects, filtering and alert generation service 354 may regenerate an ignore mask for use by an IoT camera to filter out motion that should not trigger an alert. This may occur where the ignore mask is no longer effective at filtering out motion that should not trigger an alert.

The IoT camera may cause filtering and alert generation service 354 to regenerate an ignore mask for it when the IoT camera is moved to a new location. The IoT camera may cause filtering and alert generation service 354 to regenerate an ignore mask for it when the IoT camera is instructed by a user to regenerate the ignore mask. The IoT camera may cause filtering and alert generation service 354 to regenerate an ignore mask for it when there is a change in the time of day (e.g., morning to evening) or season (e.g., winter to spring). The IoT camera may cause filtering and alert generation service 354 to regenerate an ignore mask for it based on a schedule (e.g., every 8 hours). The IoT camera may cause filtering and alert generation service 354 to regenerate an ignore mask for it when the IoT camera detects excessive motion (e.g., motion greater than a threshold value) over a period of time. The IoT camera may cause filtering and alert generation service 354 to regenerate an ignore mask for it when the IoT camera detects a change (e.g., a change in a number of pixels) between an initial frame (or series of frames) from the video stream (e.g., at initial setup of the IoT camera) and a current frame (or series of frames) from the video stream. The IoT camera may cause filtering and alert generation service 354 to regenerate an ignore mask for it when the IoT camera detects that the change is a greater than a threshold value. The IoT camera may cause filtering and alert generation service 354 to regenerate an ignore mask for it when a user indicates to filtering and alert generation service 354 that a previously triggered alert (or series of alerts) was issued in error for the video stream from the IoT camera. The IoT camera may cause filtering and alert generation service 354 to regenerate an ignore mask for it based on other conditions or events as would be appreciated by a person of ordinary skill in the art.

Filtering and alert generation service 354 may also operate to monitor for an occurrence of an event for which monitoring has been activated (e.g., either automatically or based on user input as described above). For example, filtering and alert generation service 354 may monitor for an occurrence of an event defined in accordance with an event definition. In further accordance with such an example, filtering and alert generation service 354 may utilize video data collected from one or more IoT cameras of a premises (e.g., one or more of IoT cameras 306, 308, 310, or 312 of premises 302) to monitor for one or more condition(s) that indicate that the event has occurred. Filtering and alert generation service 354 may determine which IoT cameras to use for monitoring based on the set of IoT cameras associated with the event definition. Furthermore, filtering and alert generation service 354 may utilize a set of event detection algorithms (e.g., one or more trained machine learning models) to detect whether one or more of condition(s) has been satisfied.

Filtering and alert generation service 354 may detect the occurrence of an event in real time or near real time based on video data that is collected from the IoT cameras of the premises. As noted above, each IoT camera may include a camera sensor that is configured to provide video data to filtering and alert generation service 354 on a continuous, periodic, or intermittent basis.

Filtering and alert generation service 354 may determine an alert level currently associated with premises 302 and perform event monitoring in accordance with the determined alert level. For example, premises 302 may be determined to be at one of a plurality of different alert levels. The number of alert levels and the definition of each level may vary depending upon the implementation. For example and without limitation, the alert levels associated with premises 302 may consist of a "normal" alert level and a "high" alert level. As another non-limiting example, the alert levels associated with premises 302 may consist of a "green" or "normal" alert level, a "yellow" or "elevated" alert level, an "orange" or "high" alert level, and a "red" or "severe" alert level. Still other alert level systems may be used.

Filtering and alert generation service 354 may determine the alert level currently associated with premises 302 in a variety of ways and based on a variety of factors. For example, filtering and alert generation service 354 may be configured to operate at a first alert level (e.g., "normal") until one or more triggering events are detected thereby. In response to the detection of the triggering event(s), filtering and alert generation service 354 may raise the alert level from the first alert level (e.g., "normal") to a second alert level (e.g., "elevated" or "high"). For example, a triggering event that raises the alert level may be detecting an unknown person in a home. However, this is only one example, and numerous examples of triggering events will be provided below.

The various alert levels associated with premises 302 and the type and/or number of triggering events that may cause filtering and alert generation service 354 to modify the alert level of premises 302 may be fixed or configurable aspects of processing and alerting service 350. In an example implementation in which these aspects are configurable, a user may interact with monitoring and alerts manager 352 to select or otherwise specify one or more of: (i) the number of alert levels; (ii) a name or identifier associated with each alert level; and (iii) a type and/or number of triggering events that will cause filtering and alert generation service 354 to transition between various alert levels.

Filtering and alert generation service 354 may monitor for and detect triggering events in the same manner that it monitors for and detects other events as was previously described. Thus, for example, filtering and alert generation service 354 may utilize video data collected from one or more of IoT cameras 306, 308, 310, or 312 of premises 302 to monitor for one or more condition(s) that indicate that a triggering event has occurred. Additionally, filtering and alert generation service 354 may detect that a triggering event has occurred based on information obtained from one or more data sources external to premises 302, such as information obtained from the World Wide Web or a third-party service. Filtering and alert generation service 354 may also detect that a triggering event has occurred based on a combination of video data collected from one or more of IoT cameras 306, 308, 310, or 312 within premises 302 and data obtained from one or more data sources that are external to premises 302.

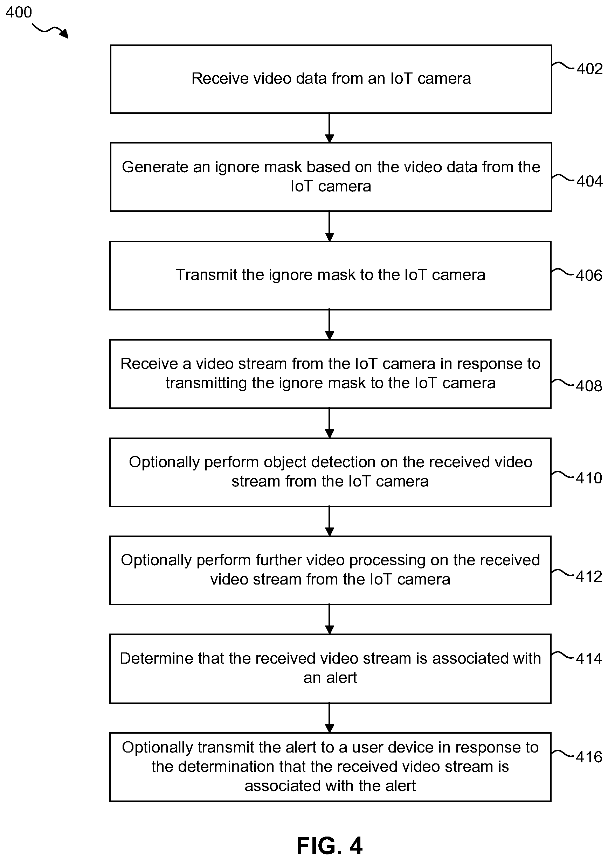

FIG. 4 is a flowchart for a method 400 for reducing errant alerts and/or network bandwidth usage from IoT cameras through the intelligent filtering out of video data using an ignore mask, according to some aspects. Method 400 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 4, as will be understood by a person of ordinary skill in the art. Moreover, while the steps are described as being performed by processing and alerting service 350 (e.g., via filtering and alert generation service 354), some or all of the steps may be performed by a processing and alerting client 330 and/or another electronic device as would be appreciated by a person of ordinary skill in the art.

Method 400 shall be described with reference to FIG. 3. However, method 400 is not limited to that example embodiment.

In step 402, processing and alerting service 350 receives video data from an IoT camera (e.g., IoT camera 306). Processing and alerting service 350 may receive a video stream from the IoT camera. Processing and alerting service 350 may receive one or more frames of a video stream from the IoT camera. Processing and alerting service 350 may receive one or more motion vectors from the IoT camera.

In step 404, processing and alerting service 350 generates an ignore mask based on the video data from the IoT camera. Processing and alerting service 350 may generate an ignore bitmask based on the video data from the IoT camera.

Processing and alerting service 350 may generate an ignore mask by detecting one or more objects in the video data. Processing and alerting service 350 may detect one or more objects in the video data that should not trigger an alert even they are in motion. For example, processing and alerting service 350 may detect a tree swaying in the wind in the video data. Processing and alerting service 350 may also detect one or more objects in the video data that should trigger an alert if they are motion. For example, processing and alerting service 350 may detect a person in the video data.

Processing and alerting service 350 may detect the one or more objects in the video data using various AI techniques. For example, processing and alerting service 350 may detect the one or more objects in the video data using a neural network.

Processing and alerting service 350 may determine whether an object should trigger an alert if it is in motion using various AI techniques. For example, processing and alerting service 350 may use a machine learning model to determine that a tree swaying in the wind should not trigger an alert. By contrast, processing and alerting service 350 may use a machine learning model to determine that a person walking around a house between 12:00 AM and 4:00 AM should trigger alert.

Processing and alerting service 350 may generate the ignore mask such that a region in the video data covering a detected object that should not trigger an alert (e.g., a tree swaying in the wind) is indicated in the ignore mask as to be ignored by the IoT camera. Processing and alerting service 350 may specify in the ignore mask that the region in a video stream from the IoT camera cannot trigger an alert. Similarly, processing and alerting service 350 may generate the ignore mask such that a region in the video data covering a detected object that should trigger an alert (e.g., a person walking around a house) is indicated in the ignore mask as should not be ignored by the IoT camera.

Processing and alerting service 350 may also generate an ignore mask by detecting one or more regions in the video data that have motion above a threshold value. The threshold value may be configured by a user. The threshold value may also be defined by processing and alerting service 350. The threshold value may be defined in various other ways as would be appreciated by a person of ordinary skill in the art.

Processing and alerting service 350 may generate the ignore mask such that a region having motion above the threshold value (e.g., a tree swaying in the wind) is indicated in the ignore mask as to be ignored by the IoT camera. Processing and alerting service 350 may specify in the ignore mask that the region in a video stream from the IoT camera cannot trigger an alert. Similarly, processing and alerting service 350 may generate the ignore mask such that a region that does not have motion above the threshold value is indicated in the ignore mask as should not be ignored by the IoT camera

Processing and alerting service 350 may also generate an ignore mask based on video data comprising one or more motion vectors from the IoT camera. Processing and alerting service 350 may generate the ignore mask by determining that one or more motion vectors are associated with motion above a threshold value. The threshold value may be configured by a user. The threshold value may also be defined by processing and alerting service 350. The threshold value may be defined in various other ways as would be appreciated by a person of ordinary skill in the art.

Processing and alerting service 350 may generate the ignore mask such that a region having a motion vector above the threshold value is indicated in the ignore mask as to be ignored by the IoT camera. Processing and alerting service 350 may specify in the ignore mask that the region in a video stream from the IoT camera cannot trigger an alert. Similarly, processing and alerting service 350 may generate the ignore mask such that a region that does not have a motion vector above the threshold value is indicated in the ignore mask as should not be ignored by the IoT camera.

In step 406, processing and alerting service 350 transmits the ignore mask to the IoT camera (e.g., over network 340). Processing and alerting service 350 may transmit the generated ignore mask to the IoT camera that uploaded the video data (e.g., one or more frames of a video stream, a video stream, or the one or more motion vectors) to processing and alerting service 350 for generation of the ignore mask.

The IoT camera may apply the ignore mask (e.g., an ignore bitmask) by generating a current motion mask (e.g., a current motion bitmask) for the current video stream, where the current motion mask specifies one or more blocks of the video stream which have motion above a threshold value. The threshold value may be configured by a user. The threshold value may also be defined by the IoT camera. The threshold value may be defined in various other ways as would be appreciated by a person of ordinary skill in the art.

After generating the current motion mask, the IoT camera may process its video stream based on the current motion mask and the ignore mask. For example, the IoT camera may eliminate the ignore mask from the current motion mask. The IoT camera may eliminate the ignore mask (e.g., an ignore bitmask) from the current motion mask (e.g., a current motion bitmask) by performing an AND operation between the ignore mask and the current motion mask, thereby producing a resulting mask (e.g., a resulting bitmask).

In step 408, processing and alerting service 350 receives a video stream from the IoT camera in response to transmitting the ignore mask to the IoT camera. For example, processing and alerting service 350 may receive the video stream from the IoT camera if the IoT camera produced a resulting mask of all zeroes as described above. Processing and alerting service 350 may also receive one or more motion vectors from the IoT camera in response to transmitting the ignore mask to the IoT camera.

In step 410, processing and alerting service 350 optionally performs object detection on the received video stream from the IoT camera. For example, processing and alerting service 350 may detect one or more objects in the video stream using various AI techniques. Processing and alerting service 350 may detect one or more objects in the video stream using a neural network. Processing and alerting service 350 may detect one or more objects in the video stream using various other techniques as would be appreciated by a person of ordinary skill in the art.

In step 412, processing and alerting service 350 optionally performs further video processing on the received video stream from the IoT camera. Processing and alerting service 350 may perform spatial filtering on the received video stream as would be appreciated by a person of ordinary skill in the art. Processing and alerting service 350 may also process the received video stream (or motion vectors associated with a video stream) from the IoT camera as though the IoT camera is pointing inside a sphere. Processing and alerting service 350 may subtract out motion associated with the IoT camera panning and/or tilting from the determination of motion in the video stream (e.g., from a motion vector).

In step 414, processing and alerting service 350 determines that the received video stream is associated with an alert. For example, processing and alerting service 350 may determine that the received video stream is associated with an alert based merely on receipt of the video stream (e.g., because the IoT camera produced a resulting mask of all zeroes). Processing and alerting service 350 may determine that the received video stream is associated with an alert based on a detected object in the video stream being associated with an event being monitored for by monitoring and alerts manager 352.

In step 416, processing and alerting service 350 optionally transmits the alert to a user device (e.g.,. a desktop, laptop, smartphone, smartwatch, smart device, etc.) in response to the determination that the received video stream is associated with the alert.

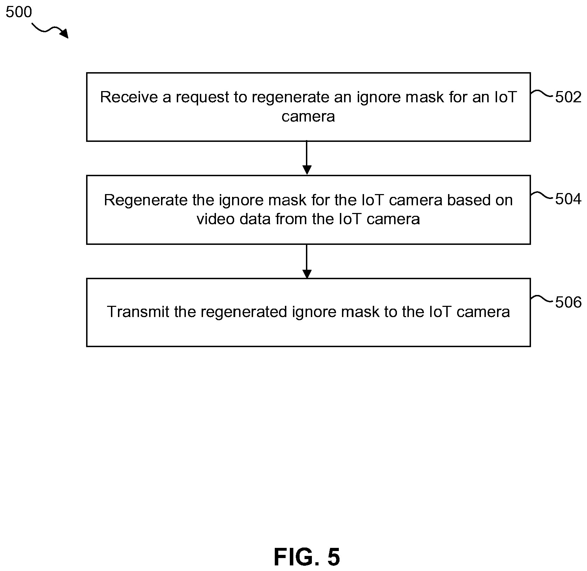

FIG. 5 is a flowchart for a method 500 for regenerating an ignore mask for intelligent filtering of video data from an IoT camera, according to some aspects. Method 500 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 5, as will be understood by a person of ordinary skill in the art. Moreover, while the steps are described as being performed by processing and alerting service 350 (e.g., via filtering and alert generation service 354), some or all of the steps may be performed by a processing and alerting client 330 and/or another electronic device as would be appreciated by a person of ordinary skill in the art.

Method 500 shall be described with reference to FIGS. 3 and 4. However, method 500 is not limited to those example embodiments.

In step 502, processing and alerting service 350 receives a request to regenerate an ignore mask for an IoT camera (e.g., IoT camera 306). The request may be received from the IoT camera, processing and alerting service 350, another electronic device (e.g., a user device such as a desktop computer, laptop computer, smartwatch, etc.), or other mechanism as would be appreciated by a person of ordinary skill in the art. Processing and alerting service 350 may receive the request to regenerate an ignore mask for the IoT camera in response to the IoT camera being moved to a new location. Processing and alerting service 350 may receive the request to regenerate an ignore mask for the IoT camera when the IoT camera is instructed by a user to regenerate the ignore mask. Processing and alerting service 350 may receive the request to regenerate an ignore mask for the IoT camera when there is a change in a time of day (e.g., morning to evening) or season (e.g., winter to spring). Processing and alerting service 350 may receive the request to regenerate an ignore mask for the IoT camera based on a schedule (e.g., every 8 hours). Processing and alerting service 350 may receive the request to regenerate an ignore mask for the IoT camera when the IoT camera detects excessive motion (e.g., motion greater than a threshold value) over a period of time. Processing and alerting service 350 may receive the request to regenerate an ignore mask for the IoT camera when the IoT camera detects a change (e.g., a change in a number of pixels) between an initial frame (or series of frames) from the video stream (e.g., at initial setup of the IoT camera) and a current frame (or series of frames) from the video stream. Processing and alerting service 350 may receive the request to regenerate an ignore mask for the IoT camera when the IoT camera when a user indicates to processing and alerting service 350 that a previously triggered alert (or series of alerts) was issued in error for the video stream from the IoT camera.

In step 504, processing and alerting service 350 regenerates the ignore mask for the IoT camera based on video data from the IoT camera. Processing and alerting service 350 may regenerate an ignore bitmask based on video data from the IoT camera.

Processing and alerting service 350 may regenerate the ignore mask by detecting objects in the video data. Processing and alerting service 350 may detect one or more objects in the video data that should not trigger an alert even they are in motion. For example, processing and alerting service 350 may detect a tree swaying in the wind in the video related data. Processing and alerting service 350 may also detect one or more objects in the video data that should trigger an alert if they are motion. For example, processing and alerting service 350 may detect a person in the video data.

Processing and alerting service 350 may detect the one or more objects in the video data using various AI techniques. For example, processing and alerting service 350 may detect the one or more objects in the video data using a neural network.

Processing and alerting service 350 may determine whether an object should trigger an alert if it is in motion using various AI techniques. For example, processing and alerting service 350 may use a machine learning model to determine that a tree swaying in the wind should not trigger an alert. By contrast, processing and alerting service 350 may use a machine learning model to determine that a person walking around a house between 12:00 AM and 4:00 AM should trigger alert.

Processing and alerting service 350 may regenerate the ignore mask such that a region covering a detected object that should not trigger an alert (e.g., a tree swaying in the wind) is indicated in the ignore mask as to be ignored by the IoT camera. Processing and alerting service 350 may specify in the ignore mask that the region in a video stream from the IoT camera cannot trigger an alert. Similarly, processing and alerting service 350 may regenerate the ignore mask such that a region covering a detected object that should trigger an alert (e.g., a person walking around a house) is indicated in the ignore mask as should not be ignored by the IoT camera.

Processing and alerting service 350 may also regenerate an ignore mask by detecting one or more regions in the video data that have motion above a threshold value. The threshold value may be configured by a user. The threshold value may also be defined by processing and alerting service 350. The threshold value may be defined in various other ways as would be appreciated by a person of ordinary skill in the art.

Processing and alerting service 350 may regenerate the ignore mask such that a region having motion above the threshold value (e.g., a tree swaying in the wind) is indicated in the ignore mask as to be ignored by the IoT camera. Processing and alerting service 350 may specify in the ignore mask that the region in a video stream from the IoT camera cannot trigger an alert. Similarly, processing and alerting service 350 may regenerate the ignore mask such that a region that does not have motion above the threshold value is indicated in the ignore mask as should not be ignored by the IoT camera.

Processing and alerting service 350 may also regenerate an ignore mask based on video data comprising one or more motion vectors from the IoT camera. Processing and alerting service 350 may regenerate the ignore mask by determining that one or more motion vectors are associated with motion above a threshold value. The threshold value may be configured by a user. The threshold value may also be defined by processing and alerting service 350. The threshold value may be defined in various other ways as would be appreciated by a person of ordinary skill in the art.

Processing and alerting service 350 may regenerate the ignore mask such that a region having a motion vector associated with motion above the threshold value is indicated in the ignore mask as to be ignored by the IoT camera. Processing and alerting service 350 may specify in the ignore mask that the region in a video stream from the IoT camera cannot trigger an alert. Similarly, processing and alerting service 350 may regenerate the ignore mask such that a region that does not have a motion vector above the threshold value is indicated in the ignore mask as should not be ignored by the IoT camera.

In step 506, processing and alerting service 350 transmits the regenerated ignore mask to the IoT camera. Processing and alerting service 350 may transmit the regenerated ignore mask to the IoT camera that uploaded the video data (e.g., one or more frames of a video stream, a video stream, or the one or more motion vectors) to processing and alerting service 350 for regeneration of the ignore mask.

After receiving the regenerated ignore mask, the IoT camera may process the video stream based on regenerated ignore mask as described above and in FIG. 4.

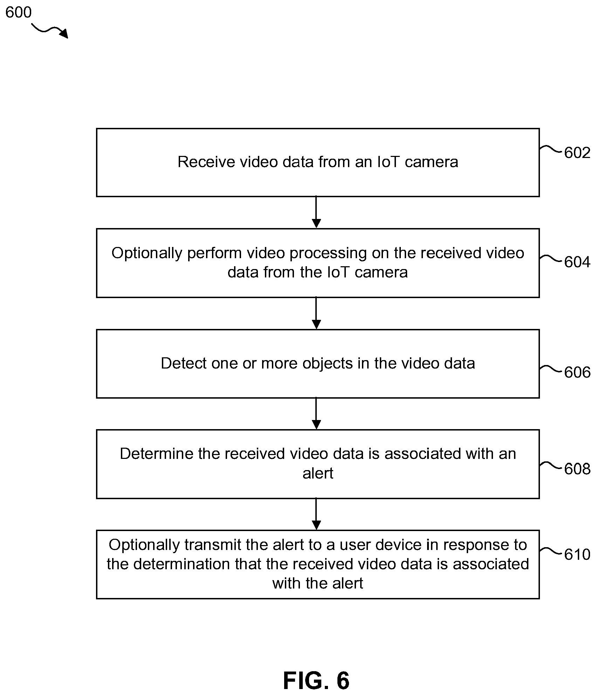

FIG. 6 is a flowchart for a method 600 for reducing errant alerts and/or network bandwidth usage from IoT cameras through the intelligent filtering out of video data using object detection, according to some aspects. Method 600 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 6, as will be understood by a person of ordinary skill in the art. Moreover, while the steps are described as being performed by processing and alerting service 350 (e.g., via filtering and alert generation service 354), some or all of the steps may be performed by a processing and alerting client 330 and/or another electronic device as would be appreciated by a person of ordinary skill in the art.

Method 600 shall be described with reference to FIG. 3. However, method 600 is not limited to that example embodiment.

In step 602, processing and alerting service 350 receives video data from an IoT camera (e.g, IoT camera 306). Processing and alerting service 350 may receive a video stream from the IoT camera. Processing and alerting service 350 may receive one or more frames of a video stream from the IoT camera.

In step 604, processing and alerting service 350 optionally performs video processing on the received video data from the IoT camera. Processing and alerting service 350 may perform spatial filtering on the received video data as would be appreciated by a person of ordinary skill in the art. Processing and alerting service 350 may also process the received video data (or motion vectors associated with the video data) from the IoT camera as though the IoT camera is pointing inside a sphere. Processing and alerting service 350 may subtract out motion associated with the IoT camera panning and/or tilting as would be appreciated by a person of ordinary skill in the art.

In step 606, processing and alerting service 350 detects one or more objects in the video data. Processing and alerting service 350 may detect the one or more objects in the video data using various AI techniques. For example, processing and alerting service 350 may detect the one or more objects in the video data using a neural network.

Processing and alerting service 350 may determine whether an object should trigger an alert if it is in motion using various AI techniques. For example, processing and alerting service 350 may use a machine learning model to determine that a tree swaying in the wind should not trigger an alert. By contrast, processing and alerting service 350 may use a machine learning model to determine that a person walking around a house between 12:00 AM and 4:00 AM should trigger alert.

In step 608, processing and alerting service 350 determines the received video data is associated with an alert. Processing and alerting service 350 may determine the received video data is associated with an alert because a detected object in the video stream is associated with an event being monitored for by monitoring and alerts manager 352.

In step 610, processing and alerting service 350 optionally transmits the alert to a user device (e.g.,. a desktop, laptop, smartphone, smartwatch, smart device, etc.) in response to the determination that the received video data is associated with the alert.

### Example Computer System

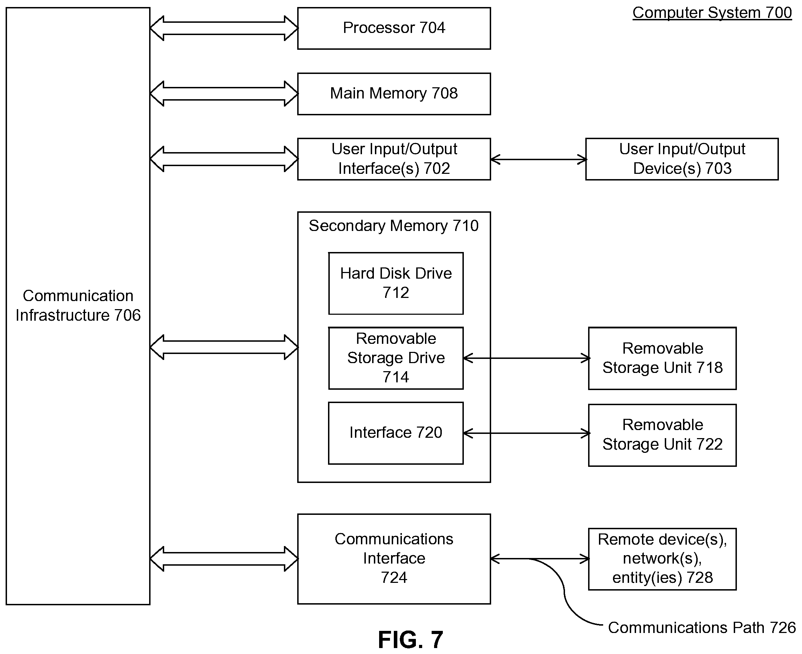

Various embodiments may be implemented, for example, using one or more well-known computer systems, such as computer system 700 shown in FIG. 7. For example, the IoT camera 306 may be implemented using combinations or sub-combinations of computer system 700. Processing and alerting service 350 may be implemented using combinations or sub-combinations of computer system 700. Also or alternatively, one or more computer systems 700 may be used, for example, to implement any of the embodiments discussed herein, as well as combinations and sub-combinations thereof.

Computer system 700 may include one or more processors (also called central processing units, or CPUs), such as a processor 704. Processor 704 may be connected to a communication infrastructure or bus 706.

Computer system 700 may also include user input/output device(s) 703, such as monitors, keyboards, pointing devices, etc., which may communicate with communication infrastructure 706 through user input/output interface(s) 702.

One or more of processors 704 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 700 may also include a main or primary memory 708, such as random access memory (RAM). Main memory 708 may include one or more levels of cache. Main memory 708 may have stored therein control logic (i.e., computer software) and/or data.

Computer system 700 may also include one or more secondary storage devices or memory 710. Secondary memory 710 may include, for example, a hard disk drive 712 and/or a removable storage device or drive 714. Removable storage drive 714 may be a floppy disk drive, a magnetic tape drive, a compact disk drive, an optical storage device, tape backup device, and/or any other storage device/drive.

Removable storage drive 714 may interact with a removable storage unit 718. Removable storage unit 718 may include a computer usable or readable storage device having stored thereon computer software (control logic) and/or data. Removable storage unit 718 may be a floppy disk, magnetic tape, compact disk, DVD, optical storage disk, and/ any other computer data storage device. Removable storage drive 714 may read from and/or write to removable storage unit 718.

Secondary memory 710 may include other means, devices, components, instrumentalities or other approaches for allowing computer programs and/or other instructions and/or data to be accessed by computer system 700. Such means, devices, components, instrumentalities or other approaches may include, for example, a removable storage unit 722 and an interface 720. Examples of the removable storage unit 722 and the interface 720 may include a program cartridge and cartridge interface (such as that found in video game devices), a removable memory chip (such as an EPROM or PROM) and associated socket, a memory stick and USB or other port, a memory card and associated memory card slot, and/or any other removable storage unit and associated interface.

Computer system 700 may further include a communication or network interface 724. Communication interface 724 may enable computer system 700 to communicate and interact with any combination of external devices, external networks, external entities, etc. (individually and collectively referenced by reference number 728). For example, communication interface 724 may allow computer system 700 to communicate with external or remote devices 728 over communications path 726, which may be wired and/or wireless (or a combination thereof), and which may include any combination of LANs, WANs, the Internet, etc. Control logic and/or data may be transmitted to and from computer system 700 via communication path 726.

Computer system 700 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 700 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 700 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 700, main memory 708, secondary memory 710, and removable storage units 718 and 722, as well as tangible articles of manufacture embodying any combination of the foregoing. Such control logic, when executed by one or more data processing devices (such as computer system 700 or processor(s) 704), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 7. In particular, embodiments can operate with software, hardware, and/or operating system implementations other than those described herein.

### Conclusion

It is to be appreciated that the Detailed Description section, and not any other section, is intended to be used to interpret the claims. Other sections can set forth one or more but not all exemplary embodiments as contemplated by the inventor(s), and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims.

## Claims

1. A computer-implemented method (400) for reducing errant alerts and network bandwidth usage from an Internet of Things, IoT, camera, comprising:
receiving (402), by at least one computer processor, video data from the IoT camera;
generating (404) an ignore mask based on the video data, wherein the ignore mask specifies one or more regions in a video stream from the IoT camera that cannot trigger an alert;
transmitting (406) the ignore mask to the IoT camera;
receiving (408) the video stream from the IoT camera in response to transmitting the ignore mask to the IoT camera;
determining (414) that the video stream is associated with the alert; and
transmitting (416) the alert to a user device in response to the determining;
wherein the generating the ignore mask comprises:
detecting a region in the video data having motion above a threshold value; and
specifying in the ignore mask that the region cannot trigger the alert.

2. The computer-implemented method of claim 1, wherein:
the generating (404) the ignore mask comprises:
detecting, using artificial intelligence, AI, an object in the video data that cannot trigger the alert; and
specifying in the ignore mask that a region in the video data covering the object cannot trigger the alert.

3. The computer-implemented method of claim 1, wherein the generating (404) the ignore mask comprises:
determining that a motion vector in the video data is associated with motion above a threshold value; and
specifying in the ignore mask that a region in the video data associated with the motion vector cannot trigger the alert.

4. The computer-implemented method of claim 1, further comprising:
detecting, using artificial intelligence, AI,, an object in the video stream; and
wherein the determining that the video stream is associated with the alert comprises:
determining that the video stream is associated with the alert based on the object being associated with an event being monitored.

5. The computer-implemented method of claim 1, further comprising:
performing video processing on the video stream, wherein the video processing comprises performing spatial filtering on the video stream or processing the video stream as though the IoT camera points inside a sphere.

6. The computer-implemented method of claim 1, further comprising:
receiving (502) a request to regenerate the ignore mask from the IoT camera, wherein the request is based on the IoT camera having been moved to a new location, an instruction from a user to regenerate the ignore mask, a change in a time of day, a schedule, or a user indication that a previously triggered alert was issued in error for the video stream; and
regenerating (504) the ignore mask based on additional video data from the IoT camera, wherein the ignore mask specifies one or more regions in the video stream from the IoT camera that cannot trigger the alert; and
transmitting (506) the ignore mask to the IoT camera.

7. A system (700) for reducing errant alerts and network bandwidth usage from an Internet of Things, IoT, camera, comprising:
one or more memories;
at least one processor each coupled to at least one of the memories and configured to perform operations comprising:
receiving (402) video data from the IoT camera;
generating (404) an ignore mask based on the video data, wherein the ignore mask specifies one or more regions in a video stream from the IoT camera that cannot trigger an alert;
transmitting (406) the ignore mask to the IoT camera;
receiving (408) the video stream from the IoT camera in response to transmitting the ignore mask to the IoT camera;
determining (414) that the video stream is associated with the alert; and
transmitting (416) the alert to a user device in response to the determining;
wherein the generating (404) the ignore mask comprises:
determining that a motion vector in the video data is associated with motion above a threshold value; and
specifying in the ignore mask that a region in the video data associated with the motion vector cannot trigger the alert.

8. The system of claim 7, wherein:
the generating (404) the ignore mask comprises:
detecting, using artificial intelligence, AI, an object in the video data that cannot trigger the alert; and
specifying in the ignore mask that a region in the video data covering the object cannot trigger the alert, and/or
the generating (404) the ignore mask comprises:
determining that a motion vector in the video data is associated with motion above a threshold value; and
specifying in the ignore mask that a region in the video data associated with the motion vector cannot trigger the alert.

9. The system of claim 7, wherein the operations further comprise:
detecting, using artificial intelligence, AI, an object in the video stream; and
wherein the determining that the video stream is associated with the alert comprises:
determining that the video stream is associated with the alert based on the object being associated with an event being monitored.

10. The system of claim 7, wherein the operations further comprise:
performing video processing on the video stream, wherein the video processing comprises performing spatial filtering on the video stream or processing the video stream as though the IoT camera points inside a sphere.

11. The system of claim 7, wherein the operations further comprise:
receiving (502) a request to regenerate the ignore mask from the IoT camera, wherein the request is based on the IoT camera having been moved to a new location, an instruction from a user to regenerate the ignore mask, a change in a time of day, a schedule, or a user indication that a previously triggered alert was issued in error for the video stream; and
regenerating (504) the ignore mask based on additional video data from the IoT camera, wherein the ignore mask specifies one or more regions in the video stream from the IoT camera that cannot trigger the alert; and
transmitting (506) the ignore mask to the IoT camera.

12. A non-transitory computer-readable medium having instructions stored thereon that, when executed by at least one computing device, cause the at least one computing device to perform operations comprising:
receiving (402) video data from an Internet of Things, IoT, camera;
generating (404) an ignore mask based on the video data, wherein the ignore mask specifies one or more regions in a video stream from the IoT camera that cannot trigger an alert;
transmitting (406) the ignore mask to the IoT camera;
receiving (408) the video stream from the IoT camera in response to transmitting the ignore mask to the IoT camera;
determining (414) that the video stream is associated with the alert; and
transmitting (416) the alert to a user device in response to the determining;
wherein the generating (404) the ignore mask comprises:
detecting a region in the video data having motion above a threshold value; and
specifying in the ignore mask that the region cannot trigger the alert.

13. The non-transitory computer-readable medium of claim 12, wherein:
the generating (404) the ignore mask comprises:
detecting, using artificial intelligence, AI, an object in the video data that cannot trigger the alert; and
specifying in the ignore mask that a region in the video data covering the object cannot trigger the alert, and/or
the generating (404) the ignore mask comprises:
determining that a motion vector in the video data is associated with motion above a threshold value; and
specifying in the ignore mask that a region in the video data associated with the motion vector cannot trigger the alert.

14. The non-transitory computer-readable medium of claim 12, wherein the operations further comprise:
detecting, using artificial intelligence, AI, an object in the video stream; and
wherein the determining that the video stream is associated with the alert comprises:
determining that the video stream is associated with the alert based on the object being associated with an event being monitored.

15. The non-transitory computer-readable medium of claim 12, wherein the operations further comprise:
performing video processing on the video stream, wherein the video processing comprises performing spatial filtering on the video stream or processing the video stream as though the IoT camera points inside a sphere.

## Patentansprüche

1. Computerimplementiertes Verfahren (400) zum Verringern von irrtümlichen Warnmeldungen und Netzwerkbandbreitennutzungen von einer Internet-der-Dinge-, loT-, Kamera, umfassend:
Empfangen (402), durch zumindest einen Computerprozessor, von Videodaten von der loT-Kamera;
Erzeugen (404) einer Ignorieren-Maske basierend auf den Videodaten, wobei die Ignorieren-Maske eine oder mehrere Regionen in einem Videostream von der loT-Kamera spezifiziert, die keine Warnmeldung auslösen kann/können;
Senden (406) der Ignorieren-Maske an die loT-Kamera;
Empfangen (408) des Videostreams von der IoT-Kamera als Antwort auf das Senden der Ignorieren-Maske an die loT-Kamera;
Bestimmen (414), dass der Videostream der Warnmeldung zugeordnet ist; und
Senden (416) der Warnmeldung an eine Benutzervorrichtung als Antwort auf das Bestimmen;
wobei das Erzeugen der Ignorieren-Maske Folgendes umfasst:
Detektieren einer Region in den Videodaten, die eine Bewegung oberhalb eines Schwellenwerts aufweist; und
Spezifizieren in der Ignorieren-Maske, dass die Region die Warnung nicht auslösen kann.

2. Computerimplementiertes Verfahren nach Anspruch 1, wobei:
das Erzeugen (404) der Ignorieren-Maske Folgendes umfasst:
Detektieren, unter Verwendung von künstlicher Intelligenz, KI, eines Gegenstands in den Videodaten, welcher die Warnung nicht auslösen kann; und
Spezifizieren in der Ignorieren-Maske, dass eine Region in den Videodaten, welche den Gegenstand abdeckt, die Warnung nicht auslösen kann.

3. Computerimplementiertes Verfahren nach Anspruch 1, wobei das Erzeugen (404) der Ignorieren-Maske Folgendes umfasst:
Bestimmen, dass ein Bewegungsvektor in den Videodaten einer Bewegung oberhalb eines Schwellenwerts zugeordnet ist; und
Spezifizieren in der Ignorieren-Maske, dass eine Region in den Videodaten, welche dem Bewegungsvektor zugeordnet ist, die Warnmeldung nicht auslösen kann.

4. Computerimplementiertes Verfahren nach Anspruch 1, ferner umfassend:
Detektieren, unter Verwendung von künstlicher Intelligenz, KI, eines Gegenstands in dem Videostream; und
wobei das Bestimmen, dass der Videostream der Warnmeldung zugeordnet ist, Folgendes umfasst:
Bestimmen, dass der Videostream der Warnung zugeordnet ist, basierend auf der Zuordnung des Gegenstands zu einem Ereignis, das überwacht wird.

5. Computerimplementiertes Verfahren nach Anspruch 1, ferner umfassend:
Durchführen von Videoverarbeitung an dem Videostream, wobei die Videoverarbeitung das Durchführen von räumlichem Filtern an dem Videostream oder Verarbeiten des Videostreams, als ob die loT-Kamera in eine Kugel gerichtet wäre, umfasst.

6. Computerimplementiertes Verfahren nach Anspruch 1, ferner umfassend:
Empfangen (502) einer Anfrage zum erneuten Erzeugen der Ignorieren-Maske von der loT-Kamera, wobei die Anfrage auf Folgendem basiert: Versetzen der IoT-Kamera an eine neue Stelle, einem Befehl von einem Benutzer zur erneuten Erzeugung der Ignorieren-Maske, einer Änderung der Tageszeit, einem Plan oder einer Benutzerangabe, dass eine zuvor ausgelöste Warnmeldung fälschlicherweise für den Videostream ausgegeben wurde; und
erneutes Erzeugen (504) der Ignorieren-Maske basierend auf zusätzlichen Videodaten von der IoT-Kamera, wobei die Ignorieren-Maske eine oder mehrere Regionen in dem Videostream von der loT-Kamera, welche die Warnmeldung nicht auslösen kann/können spezifiziert; und
Senden (506) der Ignorieren-Maske an die loT-Kamera.

7. System (700) zum Verringern von irrtümlichen Warnmeldungen und Netzwerkbandbreitennutzungen von einer Internet-der-Dinge-, loT-, Kamera, umfassend:
einen oder mehrere Speicher;
zumindest einen Prozessor, der jeweils mit zumindest einem aus den Speichern gekoppelt und dazu ausgelegt ist, Operationen durchzuführen, die Folgendes umfassen:
Empfangen (402), von Videodaten von der IoT-Kamera;
Erzeugen (404) einer Ignorieren-Maske basierend auf den Videodaten, wobei die Ignorieren-Maske eine oder mehrere Regionen in einem Videostream von der IoT-Kamera spezifiziert, die keine Warnmeldung auslösen kann/können;
Senden (406) der Ignorieren-Maske an die loT-Kamera;
Empfangen (408) des Videostreams von der loT-Kamera als Antwort auf das Senden der Ignorieren-Maske an die loT-Kamera;
Bestimmen (414), dass der Videostream der Warnmeldung zugeordnet ist; und
Senden (416) der Warnmeldung an eine Benutzervorrichtung als Antwort auf das Bestimmen;
wobei das Erzeugen (404) der Ignorieren-Maske Folgendes umfasst:
Bestimmen, dass ein Bewegungsvektor in den Videodaten einer Bewegung oberhalb eines Schwellenwerts zugeordnet ist; und
Spezifizieren in der Ignorieren-Maske, dass eine Region in den Videodaten, welche dem Bewegungsvektor zugeordnet ist, die Warnmeldung nicht auslösen kann.

8. System nach Anspruch 7, wobei:
das Erzeugen (404) der Ignorieren-Maske Folgendes umfasst:
Detektieren, unter Verwendung von künstlicher Intelligenz, KI, eines Gegenstands in den Videodaten, welcher die Warnung nicht auslösen kann; und
Spezifizieren in der Ignorieren-Maske, dass eine Region in den Videodaten, welche den Gegenstand abdeckt, die Warnung nicht auslösen kann; und/oder
Bestimmen, dass ein Bewegungsvektor in den Videodaten einer Bewegung über einem Schwellenwert zugeordnet ist; und
Spezifizieren in der Ignorieren-Maske, dass eine Region in den Videodaten, welche dem Bewegungsvektor zugeordnet ist, die Warnmeldung nicht auslösen kann.

9. System nach Anspruch 7, wobei die Operationen ferner Folgendes umfassen:
Detektieren, unter Verwendung von künstlicher Intelligenz, KI, eines Gegenstands in dem Videostream; und
wobei das Bestimmen, dass der Videostream der Warnmeldung zugeordnet ist, Folgendes umfasst:
Bestimmen, dass der Videostream der Warnung zugeordnet ist, basierend auf der Zuordnung des Gegenstands zu einem Ereignis, das überwacht wird.

10. System nach Anspruch 7, wobei die Operationen ferner Folgendes umfassen:
Durchführen von Videoverarbeitung an dem Videostream, wobei die Videoverarbeitung das Durchführen von räumlichem Filtern an dem Videostream oder Verarbeiten des Videostreams, als ob die loT-Kamera in eine Kugel gerichtet wäre, umfasst.

11. System nach Anspruch 7, wobei die Operationen ferner Folgendes umfassen:
Empfangen (502) einer Anfrage zum erneuten Erzeugen der Ignorieren-Maske von der loT-Kamera, wobei die Anfrage auf Folgendem basiert: Versetzen der loT-Kamera an eine neue Stelle, einem Befehl von einem Benutzer zur erneuten Erzeugung der Ignorieren-Maske, einer Änderung der Tageszeit, einem Plan oder einer Benutzerangabe, dass eine zuvor ausgelöste Warnmeldung fälschlicherweise für den Videostream ausgegeben wurde; und
erneutes Erzeugen (504) der Ignorieren-Maske basierend auf zusätzlichen Videodaten von der IoT-Kamera, wobei die Ignorieren-Maske eine oder mehrere Regionen in dem Videostream von der loT-Kamera, welche die Warnmeldung nicht auslösen kann/können spezifiziert; und
Senden (506) der Ignorieren-Maske an die loT-Kamera.

12. Nichtflüchtiges computerlesbares Medium, auf dem Befehle gespeichert sind, die, wenn sie durch zumindest eine Computervorrichtung ausgeführt werden, bewirken, dass die zumindest eine Computervorrichtung Operationen durchführt, die Folgendes umfassen:
Empfangen (402), von Videodaten von einer Internet-der-Dinge-, IoT-, Kamera;
Erzeugen (404) einer Ignorieren-Maske basierend auf den Videodaten, wobei die Ignorieren-Maske eine oder mehrere Regionen in einem Videostream von der loT-Kamera spezifiziert, die keine Warnmeldung auslösen kann/können;
Senden (406) der Ignorieren-Maske an die loT-Kamera;
Empfangen (408) des Videostreams von der IoT-Kamera als Antwort auf das Senden der Ignorieren-Maske an die loT-Kamera;
Bestimmen (414), dass der Videostream der Warnmeldung zugeordnet ist; und
Senden (416) der Warnmeldung an eine Benutzervorrichtung als Antwort auf das Bestimmen;
wobei das Erzeugen (404) der Ignorieren-Maske Folgendes umfasst:
Detektieren einer Region in den Videodaten, die eine Bewegung oberhalb eines Schwellenwerts aufweist; und
Spezifizieren in der Ignorieren-Maske, dass die Region die Warnung nicht auslösen kann.

13. Nichtflüchtiges computerlesbares Medium nach Anspruch 12, wobei:
das Erzeugen (404) der Ignorieren-Maske Folgendes umfasst:
Detektieren, unter Verwendung von künstlicher Intelligenz, KI, eines Gegenstands in den Videodaten, welcher die Warnung nicht auslösen kann; und
Spezifizieren in der Ignorieren-Maske, dass eine Region in den Videodaten, welche den Gegenstand abdeckt, die Warnung nicht auslösen kann; und/oder
wobei das Erzeugen (404) der Ignorieren-Maske Folgendes umfasst:
Bestimmen, dass ein Bewegungsvektor in den Videodaten einer Bewegung über einem Schwellenwert zugeordnet ist; und
Spezifizieren in der Ignorieren-Maske, dass eine Region in den Videodaten, welche dem Bewegungsvektor zugeordnet ist, die Warnmeldung nicht auslösen kann.

14. Nichtflüchtiges computerlesbares Medium nach Anspruch 12, wobei die Operationen ferner Folgendes umfassen:
Detektieren, unter Verwendung von künstlicher Intelligenz, KI, eines Gegenstands in dem Videostream; und
wobei das Bestimmen, dass der Videostream der Warnmeldung zugeordnet ist, Folgendes umfasst:
Bestimmen, dass der Videostream der Warnung zugeordnet ist, basierend auf der Zuordnung des Gegenstands zu einem Ereignis, das überwacht wird.

15. Nichtflüchtiges computerlesbares Medium nach Anspruch 12, wobei die Operationen ferner Folgendes umfassen:
Durchführen von Videoverarbeitung an dem Videostream, wobei die Videoverarbeitung das Durchführen von räumlichem Filtern an dem Videostream oder Verarbeiten des Videostreams, als ob die loT-Kamera in eine Kugel gerichtet wäre, umfasst.

## Revendications

1. Procédé mis en œuvre par ordinateur (400) pour réduire les alertes errantes et l'utilisation de la bande passante du réseau à partir d'une caméra de l'Internet des objets, IOT, comprenant les étapes consistant à :
recevoir (402), par l'intermédiaire d'au moins un processeur informatique, des données vidéo provenant de la caméra IoT ;
générer (404) un masque d'ignorance sur la base des données vidéo, dans lequel le masque d'ignorance spécifie une ou plusieurs régions dans un flux vidéo à partir de la caméra IoT qui ne peut pas déclencher une alerte ;
transmettre (406) le masque d'ignorance à la caméra IoT ;
recevoir (408) le flux vidéo à partir de la caméra IoT en réponse à la transmission du masque d'ignorance à la caméra IoT ;
déterminer (414) que le flux vidéo est associé à l'alerte ; et
transmettre (416) l'alerte à un dispositif utilisateur en réponse à la détermination ;
dans lequel la génération du masque d'ignorance comprend les étapes consistant à :
détecter une région dans les données vidéo présentant un mouvement supérieur à une valeur de seuil ; et
spécifier dans le masque d'ignorance que la région ne peut pas déclencher l'alerte.

2. Procédé mis en œuvre par ordinateur selon la revendication 1, dans lequel :
la génération (404) du masque d'ignorance comprend les étapes consistant à :
détecter, en utilisant une intelligence artificielle, IA, un objet dans les données vidéo qui ne peut pas déclencher l'alerte ; et
spécifier dans le masque d'ignorance qu'une région dans les données vidéo couvrant l'objet ne peut pas déclencher l'alerte.

3. Procédé mis en œuvre par ordinateur selon la revendication 1, dans laquelle la génération (404) du masque d'ignorance comprend les étapes consistant à :
déterminer qu'un vecteur de mouvement dans les données vidéo est associé à un mouvement au-dessus d'une valeur de seuil ; et
spécifier dans le masque d'ignorance qu'une région des données vidéo associées au vecteur de mouvement ne peut pas déclencher l'alerte.

4. Procédé mis en œuvre par ordinateur selon la revendication 1, comprenant en outre les étapes consistant à :
détecter, en utilisant une intelligence artificielle, IA, un objet dans le flux vidéo ; et
dans lequel la détermination que le flux vidéo est associé à l'alerte comprend l'étape consistant à :
déterminé que le flux vidéo est associé à l'alerte sur la base de l'objet associé à un événement surveillé.

5. Procédé mis en œuvre par ordinateur selon la revendication 1, comprenant en outre l'étape consistant à :
effectuer un traitement vidéo sur le flux vidéo, dans lequel le traitement vidéo comprend la réalisation d'un filtrage spatial sur le flux vidéo ou le traitement du flux vidéo comme si la caméra IoT pointait à l'intérieur d'une sphère.

6. Procédé mis en œuvre par ordinateur selon la revendication 1, comprenant en outre les étapes consistant à :
recevoir (502) une demande de régénération du masque d'ignorance à partir de la caméra IoT, dans lequel la demande est basée sur la caméra IoT ayant été déplacée vers un nouvel emplacement, une instruction d'un utilisateur de régénérer le masque d'ignorance, un changement d'heure de la journée, un calendrier, ou une indication de l'utilisateur qu'une alerte précédemment déclenchée a été émise par erreur pour le flux vidéo ; et
régénérer (504) le masque d'ignorance sur la base de données vidéo supplémentaires provenant de la caméra IoT, dans lequel le masque d'ignorance spécifie une ou plusieurs régions dans le flux vidéo provenant de la caméra IoT qui ne peuvent pas déclencher l'alerte ; et
transmettre (506) le masque d'ignorance à la caméra IoT.

7. Système (700) pour réduire les alertes errantes et l'utilisation de la bande passante du réseau à partir d'une caméra de l'Internet des objets, IOT, comprenant :
une ou plusieurs mémoires ;
au moins un processeur couplé chacun à moins une des mémoires et configuré pour effectuer des opérations comprenant :
recevoir (402) des données vidéo à partir de la caméra IoT ;
générer (404) un masque d'ignorance sur la base des données vidéo, dans lequel le masque d'ignorance spécifie une ou plusieurs régions dans un flux vidéo à partir de la caméra IoT qui ne peut pas déclencher une alerte ;
transmettre (406) le masque d'ignorance à la caméra IoT ;
recevoir (408) le flux vidéo à partir de la caméra IoT en réponse à la transmission du masque d'ignorance à la caméra IoT ;
déterminer (414) que le flux vidéo est associé à l'alerte ; et
transmettre (416) l'alerte à un dispositif utilisateur en réponse à la détermination ;
dans lequel la génération (404) du masque d'ignorance comprend :
déterminer qu'un vecteur de mouvement dans les données vidéo est associé à un mouvement au-dessus d'une valeur de seuil ; et
spécifier dans le masque d'ignorance qu'une région des données vidéo associées au vecteur de mouvement ne peut pas déclencher l'alerte.

8. Système selon la revendication 7, dans lequel :
la génération (404) du masque d'ignorance comprend les étapes consistant à :
détecter, en utilisant une intelligence artificielle, IA, un objet dans les données vidéo qui ne peut pas déclencher l'alerte ; et
spécifier dans le masque d'ignorance qu'une région dans les données vidéo couvrant l'objet ne peut pas déclencher l'alerte, et/ou
la génération (404) du masque d'ignorance comprend :
déterminer qu'un vecteur de mouvement dans les données vidéo est associé à un mouvement au-dessus d'une valeur de seuil ; et
spécifier dans le masque d'ignorance qu'une région des données vidéo associées au vecteur de mouvement ne peut pas déclencher l'alerte.

9. Système selon la revendication 7, dans lequel les opérations comprennent en outre :
détecter, en utilisant une intelligence artificielle, IA, un objet dans le flux vidéo ; et
dans lequel la détermination que le flux vidéo est associé à l'alerte comprend l'étape consistant à :
déterminé que le flux vidéo est associé à l'alerte sur la base de l'objet associé à un événement surveillé.

10. Système selon la revendication 7, dans lequel les opérations comprennent en outre :
effectuer un traitement vidéo sur le flux vidéo, dans lequel le traitement vidéo comprend la réalisation d'un filtrage spatial sur le flux vidéo ou le traitement du flux vidéo comme si la caméra IoT pointait à l'intérieur d'une sphère.

11. Système selon la revendication 7, dans lequel les opérations comprennent en outre :
recevoir (502) une demande de régénération du masque d'ignorance à partir de la caméra IoT, dans lequel la demande est basée sur la caméra IoT ayant été déplacée vers un nouvel emplacement, une instruction d'un utilisateur de régénérer le masque d'ignorance, un changement d'heure de la journée, un calendrier, ou une indication de l'utilisateur qu'une alerte précédemment déclenchée a été émise par erreur pour le flux vidéo ; et
régénérer (504) le masque d'ignorance sur la base de données vidéo supplémentaires provenant de la caméra IoT, dans lequel le masque d'ignorance spécifie une ou plusieurs régions dans le flux vidéo provenant de la caméra IoT qui ne peuvent pas déclencher l'alerte ; et
transmettre (506) le masque d'ignorance à la caméra IoT.

12. Support lisible non transitoire par ordinateur sur lequel sont stockées des instructions qui, lorsqu'elles sont exécutées par au moins un dispositif informatique, amènent le au moins un dispositif informatique à exécuter des opérations comprenant :
recevoir (402) des données vidéo provenant d'une caméra de l'Internet des objets, IoT ;
générer (404) un masque d'ignorance sur la base des données vidéo, dans lequel le masque d'ignorance spécifie une ou plusieurs régions dans un flux vidéo à partir de la caméra IoT qui ne peut pas déclencher une alerte ;
transmettre (406) le masque d'ignorance à la caméra IoT ;
recevoir (408) le flux vidéo à partir de la caméra IoT en réponse à la transmission du masque d'ignorance à la caméra IoT ;
déterminer (414) que le flux vidéo est associé à l'alerte ; et
transmettre (416) l'alerte à un dispositif utilisateur en réponse à la détermination ;
dans lequel la génération (404) du masque d'ignorance comprend :
détecter une région dans les données vidéo présentant un mouvement supérieur à une valeur de seuil ; et
spécifier dans le masque d'ignorance que la région ne peut pas déclencher l'alerte.

13. Support lisible non transitoire par ordinateur selon la revendication 12, dans lequel :
la génération (404) du masque d'ignorance comprend :
détecter, en utilisant une intelligence artificielle, IA, un objet dans les données vidéo qui ne peut pas déclencher l'alerte ; et
spécifier dans le masque d'ignorance qu'une région dans les données vidéo couvrant l'objet ne peut pas déclencher l'alerte, et/ou
la génération (404) du masque d'ignorance comprend :
déterminer qu'un vecteur de mouvement dans les données vidéo est associé à un mouvement au-dessus d'une valeur de seuil ; et
spécifier dans le masque d'ignorance qu'une région des données vidéo associées au vecteur de mouvement ne peut pas déclencher l'alerte.

14. Support lisible par ordinateur non transitoire selon la revendication 12, dans lequel les opérations comprennent en outre :
détecter, en utilisant une intelligence artificielle, IA, un objet dans le flux vidéo ; et
dans lequel la détermination que le flux vidéo est associé à l'alerte comprend l'étape consistant à :
déterminé que le flux vidéo est associé à l'alerte sur la base de l'objet associé à un événement surveillé.

15. Support lisible par ordinateur non transitoire selon la revendication 12, dans lequel les opérations comprennent en outre :
effectuer un traitement vidéo sur le flux vidéo, dans lequel le traitement vidéo comprend la réalisation d'un filtrage spatial sur le flux vidéo ou le traitement du flux vidéo comme si la caméra IoT pointait à l'intérieur d'une sphère.
